# EUROPEAN PATENT APPLICATION

(11) **EP 4 663 443 A1**
(43) Date of publication of application: **17.12.2025**
(21) Application number: 25178524.2
(22) Date of filing: 23.05.2025
(51) Int. Cl.: B60K 1/02

(54) **MECHATRONIC UNIT AND ELECTRIC VEHICLE**

(30) Priority: 12.06.2024 JP 2024094858
(71) Applicant: TOYOTA JIDOSHA KABUSHIKI KAISHA, Toyota-shi, Aichi-ken 471-8571 (JP)
(72) Inventor: HISHINUMA, Shoji, TOYOTA-SHI, AICHI-KEN, 471-8571 (JP)
(74) Representative: Cabinet Beau de Loménie

(57) **Abstract**

A mechatronic unit (100) is integrally formed from a transaxle (110) and at least one power controller (120,130). The at least one power controller (120,130) is arranged at an outer side of the transaxle (110) in a lateral direction. The mechatronic unit (100) includes a recessed surface (F) located on an external side surface, above a horizontal line (L) lying along an uppermost portion of a drive shaft (90) in a vertical direction, and laterally inward from the lower area located below the horizontal line (L).

## Description

### CROSS-REFERENCE TO RELATED APPLICATIONS

This application is based upon and claims the benefit of priority from Japanese Patent Application No. 2024-094858, filed on June 12, 2024, the entire contents of which are incorporated herein by reference.

### BACKGROUND

### 1. Field

The following description relates to a mechatronic unit and an electric vehicle.

### 2. Description of Related Art

A known electric vehicle drives wheels using a motor supplied with electric power from a battery. Japanese Laid-Open Patent Publication No. 2012-170177 discloses a drive unit including a power controller that controls the power supplied to a motor. The power controller is arranged above a transaxle that includes the motor.

The drive unit that integrally forms the transaxle and the power controller is referred to as a mechatronic unit.

The power controller includes a DC-DC converter, which steps up the voltage of direct current (DC) power supplied from the battery, and an inverter, which converts the DC to alternating current (AC). In an arrangement of the mechatronic unit, the power controller is disposed on an upper surface of a transaxle case. Thus, the center of gravity of the mechatronic unit is located at relatively high position. The high center of gravity of the mechatronic unit hinders efforts to lower the center of gravity of the vehicle.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a mechatronic unit is arranged in front of a cabin of a vehicle. The mechatronic unit includes a transaxle and at least one power controller integrated with the transaxle. The at least one power controller is arranged at an outer side of the transaxle in a lateral direction. The transaxle includes a motor configured to produce rotational power, a drive shaft, and a power transmission mechanism configured to transmit the rotational power of the motor to the drive shaft. The at least one power controller is configured to control electric power supplied to the motor. The mechatronic unit includes an external side surface at an end in the lateral direction. When the mechatronic unit is mounted on the vehicle, the external side surface includes an upper area located above a horizontal line lying along an uppermost portion of the drive shaft in a vertical direction and a lower area located below the horizontal line. The upper area includes a recessed surface located laterally inward from the lower area.

In another general aspect, an electric vehicle includes a front side member configured to be bent inward in a lateral direction from a predetermined position when the vehicle encounters a frontal collision and the mechatronic unit mentioned above. The front side member is configured to abut against the recessed surface when the front side member is bent inward in the lateral direction at the predetermined position by a predetermined angle when the vehicle encounters the frontal collision.

In a further general aspect, an electric vehicle includes a front side member configured to be bent inward in lateral direction at a predetermined position when the vehicle encounters a frontal collision. A mechatronic unit includes a transaxle and at least one power controller integrated with the transaxle. The at least one power controller is arranged at an outer side of the transaxle in the lateral direction. The transaxle includes a motor configured to produce rotational power, a drive shaft, and a power transmission mechanism configured to transmit the rotational power of the motor to the drive shaft. The at least one power controller is configured to control electric power supplied to the motor. The mechatronic unit includes an external side surface at an end in the lateral direction. The external side surface includes an overlapping area that overlaps with the front side member and a non-overlapping area that does not overlap with the front side member in side view. The overlapping area includes a recessed surface that is located laterally inward from the non-overlapping area, and the front side member is configured to abut the recessed surface when the front side member is bent inward in the lateral direction at the predetermined position by a predetermined angle when the vehicle encounters the frontal collision.

Other features and aspects will be apparent from the following detailed description, the drawings, and the claims.

### BRIEF DESCRIPTION OF THE DRAWINGS

Fig. 1 is a side view of a front frame structure in an electric vehicle in accordance with a first embodiment.
Fig. 2 is a schematic view of a drivetrain and electrical system in the electric vehicle of Fig. 1.
Fig. 3 is a schematic view showing a condition of a comparative vehicle prior to a slight overlap frontal collision.
Fig. 4 a schematic view showing the comparative vehicle at the time of the slight overlap frontal collision.
Fig. 5 is a side view of a mechatronic unit shown in Fig. 1.
Fig. 6 is a cross-sectional view of the mechatronic unit taken along line 6-6 in Fig. 5.
Fig. 7 is a schematic view showing the electric vehicle of Fig. 1 prior to a slight overlap frontal collision.
Fig. 8 a schematic view showing the electric vehicle of Fig. 1 at the time of the slight overlap frontal collision.
Fig. 9 is a side view of the mechatronic unit in a modified example of the first embodiment.
Fig. 10 is a side view of a mechatronic unit in accordance with a second embodiment.
Fig. 11 is cross-sectional view of the mechatronic unit taken along the line 11-11 of Fig. 10.
Fig. 12 is a side view of a mechatronic unit in accordance with a third embodiment.
Fig. 13 is a cross-sectional view of the mechatronic unit taken along the line 13-13 of Fig. 12.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

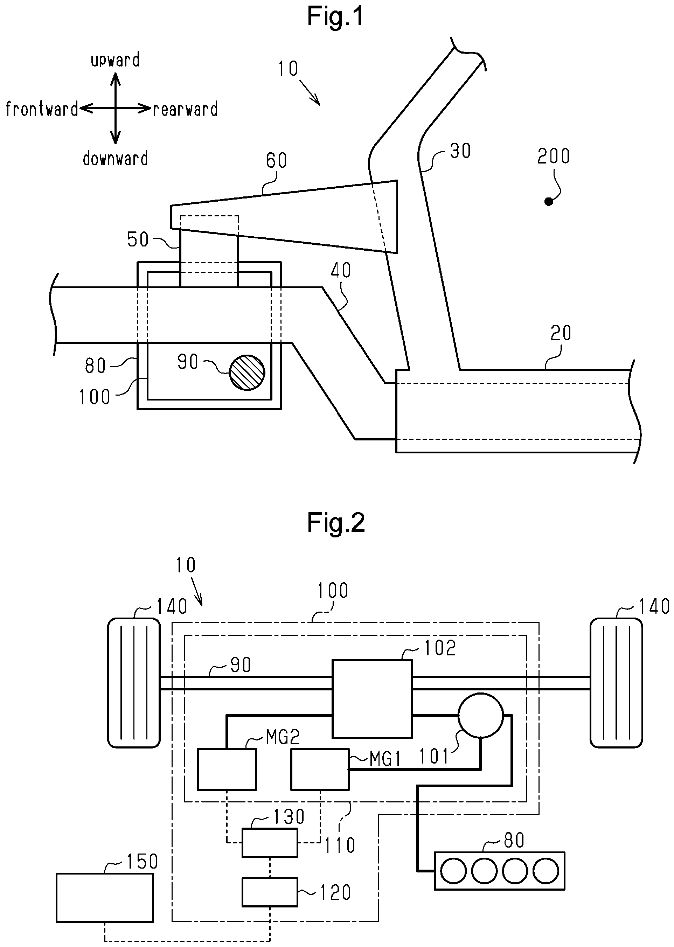

A first embodiment of a mechatronic unit and an electric vehicle will now be described with reference to Figs 1 to 9. In the description hereafter, the frame of reference for the frontward, rearward, leftward, rightward, upward, and downward directions will be based on a passenger of the vehicle facing the front of the vehicle. The left-right direction of the vehicle corresponds to the lateral direction.

### Front Frame Structure of Vehicle 10 in a First Embodiment

As shown in Fig. 1, the electric vehicle 10 includes on each of its left and right side (only one side shown), a side sill 20, a front pillar 30, a front side member 40, a strut tower 50, and a cowl top side 60. The front pillar 30 extends upward from the front end of the side sill 20. The electric vehicle 10 includes a cabin 200 surrounded by the side sill 20 and the front pillar 30. The front side member 40 extends in front of the front pillar 30 and the side sill 20. The strut tower 50 is connected to the front side member 40. More specifically, the strut tower 50 is connected to the portion of the front side member 40 in front of the front pillar 30. The cowl top side 60 includes a front end connected to the strut tower 50 and a rear end connected to the front pillar 30.

The electric vehicle 10 is a hybrid electric vehicle. The electric vehicle 10 has a power source that including an engine 80 and a mechatronic unit 100 and is arranged in front of the cabin 200. The mechatronic unit 100 includes a drive shaft 90. The drive shaft 90 is arranged below the front side member 40 as viewed from the side of the vehicle.

### Drive Structure and Electrical System Structure of the Electric vehicle 10

As shown in Fig. 2, the mechatronic unit 100 includes a transaxle 110, a DC-DC converter 120, and an inverter 130. The transaxle 110 includes a first motor-generator MG1, a second motor-generator MG2, a power split mechanism 101, and a speed reduction mechanism 102. The power split mechanism 101 is a planetary gear mechanism. The speed reduction mechanism 102 is coupled to front wheels 140 through the drive shaft 90.

The first motor-generator MG1 and the second motor-generator MG2 are connected to a battery 150 through the inverter 130 and the DC-DC converter 120. The DC-DC converter 120 and the inverter 130 together each define a power controller. The DC power voltage of the battery 150 is increased by the DC-DC converter 120. The increased DC power voltage is converted to AC power by the inverter 130. The AC power is supplied to the first motor-generator MG1 and the second motor-generator MG2.

The first motor-generator MG1, which is supplied with the AC power, has the functionality of a starter that starts a crankshaft, which is an output shaft of the engine 80, when starting the engine 80. Thus, the first motor-generator MG1 has the functionality of an engine driving motor that generates driving force in accordance with the electric power supplied by the battery 150.

The second motor-generator MG2 is coupled to the front wheels 140 through the speed reduction mechanism 102 and the drive shaft 90. Rotational power of the second motor-generator MG2, which is supplied with the AC power, is transmitted to the front wheels 140 through the speed reduction mechanism 102 and the drive shaft 90, which together form a power transmission mechanism. Thus, the second motor-generator MG2 acts as a wheel driving motor.

The engine 80 is coupled to the front wheels 140 through the power split mechanism 101, the speed reduction mechanism 102, and the drive shaft 90. In the same manner as the speed reduction mechanism 102 and the drive shaft 90, the power split mechanism 101 also forms the power transmission mechanism. The rotational power of the engine 80 is transmitted to the front wheels 140 through the power transmission mechanism. The power split mechanism 101 is also coupled to the first motor-generator MG1. The first motor-generator MG1 is a three-phase AC motor generator. The power split mechanism 101 is capable of splitting the driving force among the engine 80, the first motor-generator MG1, and the front wheels 140.

The first motor-generator MG1 generates electric power with the driving force received from the engine 80 and the driving force received from the front wheels 140. The first motor-generator MG1 has the functionality of a generator. The AC power generated by the first motor-generator MG1 is converted to DC power by the inverter 130. The DC power converted by the inverter 130 is decreased in voltage by the DC-DC converter 120 and then used to charge the battery 150.

The second motor-generator MG2 generates electric power with the driving force received from the front wheels 140 when the electric vehicle 10 decelerates. In other words, the electric vehicle 10 performs regenerative charging. The second motor-generator MG2 has the functionality of a generator. The AC power generated by the second motor-generator MG2 is converted to DC power by the inverter 130. The DC power converted by the inverter 130 is decreased in voltage by the DC-DC converter 120 and then used to charge the battery 150. The electric vehicle 10 may be a plug-in hybrid electric vehicle, of which the battery 150 can be charged by connection to an external power supply.

### Slight Overlap Frontal Collision Countermeasure of a Vehicle 15 in a Comparative Example

A front frame structure of a vehicle that resists a slight overlap frontal collision will now be described. A slight overlap frontal collision is a type of frontal collision in which the object colliding with and overlapping the vehicle is relatively small in a lateral direction. The load that acts on the front side member, which is the colliding side, when colliding with the object, which is the collided side, is greater in a slight overlap frontal collision than when the overlap of the vehicle and the object is large in the lateral direction.

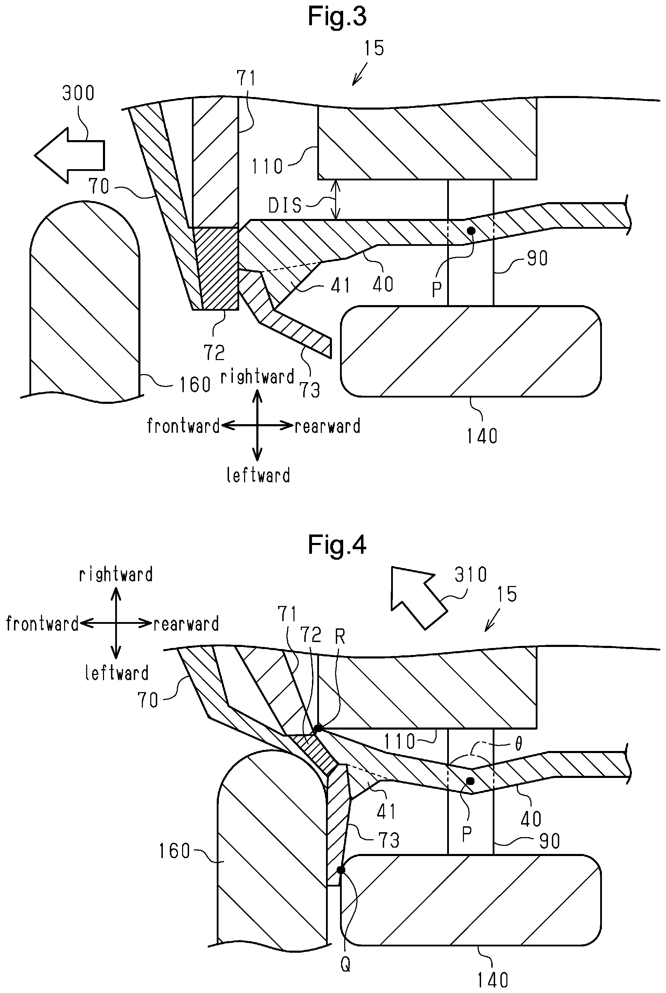

Fig. 3 shows the front frame structure of a comparative vehicle 15. The front frame structure implements the slight overlap frontal collision countermeasure. Among the left and right front side members 40 of the vehicle 15, Fig. 3 shows the left front side member 40.

As shown in Fig. 3, the transaxle 110 includes lateral ends, each defining an external side surface. The external side surface faces an outer lateral side. The power controller is not arranged on the external side surface of the transaxle 110 in the vehicle 15. The power controller is arranged, for example, on an upper surface of the transaxle 110.

A first impact absorbing member 72 is coupled to the front end of the left front side member 40. The first impact absorbing member 72 is also coupled to the front end of the right front side member 40. The vehicle 15 includes a bumper reinforcement 70 that extends between the front ends of the left and right first impact absorbing members 72. The bumper reinforcement 70 extends in the lateral direction. A cross member 71 is coupled to the left and the right first impact absorbing member 72.

The front side members 40 are coupled to the bumper reinforcement 70 with the corresponding the first impact absorbing member 72 located in between. Each front side member 40 includes a triangular spacer 41. A second impact absorbing member 73 is joined to the triangular spacer 41. The first impact absorbing member 72 is coupled to the second impact absorbing member 73. The front end of the front side member 40 is coupled to the first impact absorbing member 72. The second impact absorbing member 73 is coupled to the laterally outer side of the front side member 40. The front side member 40 is designed to be bent towards the laterally inner side from a predetermined first position P when a frontal collision occurs. The transaxle 110 of the vehicle 15 is coupled to the front wheels 140 through the drive shaft 90. The front wheels 140 are arranged behind the second impact absorbing member 73 in a longitudinal direction. Fig. 3 shows a barrier 160 used in a slight overlap frontal collision test. The vehicle 15 moves in the direction of first arrow 300. The vehicle 15 collides with the barrier 160 during a slight overlap frontal collision.

### Deformation of Front Frame Structure in Slight Overlap Frontal Collision

As shown in Fig. 4, the vehicle 15 that collides with the barrier 160 during a slight overlap frontal collision absorbs the impact of the collision through the deformation of multiple members. When the vehicle 15 collides with the barrier 160 in the slight overlap frontal collision, load acts on the bumper reinforcement 70 and the first impact absorbing member 72. As a result, the bumper reinforcement 70 and the first impact absorbing member 72 are buckled or fractured from the front. The buckling or fracturing consumes part of the load produced by the slight overlap frontal collision.

The load that is not consumed by the bumper reinforcement 70 and the first impact absorbing member 72 acts on the second impact absorbing member 73 through the first impact absorbing member 72. This deforms the second impact absorbing member 73. The load acting on the second impact absorbing member 73 is consumed by the deformation of the second impact absorbing member 73. The deformed second impact absorbing member 73 abuts the front wheel 140 at a second position Q. The load acting on the second impact absorbing member 73 is transmitted to the front wheel 140. The transmitted load is consumed by deformation of the front wheel 140.

The load that is not consumed by the bumper reinforcement 70, the first impact absorbing member 72, the second impact absorbing member 73, and the front wheels 140 is transmitted to the front side member 40. As a result, the front side member 40 bends to the predetermined angle θ, at the predetermined first position P. Part of the load acting on the front side member 40 is consumed by the deformation of the front side member 40.

As shown in Fig. 3, a predetermined distance DIS is provided between the transaxle 110 and the front side member 40 in the vehicle 15. The predetermined distance DIS is the distance required for the front side member 40 to bend to a predetermined angle θ at the predetermined position P.

As shown in Fig. 4, the bent front side member 40 abuts the transaxle 110 at a predetermined third position R. Thus, the load acts on the transaxle 110 toward the laterally right side. The transaxle 110 is coupled to the engine 80 (not shown). The load acting on the transaxle 110 is transmitted to the engine 80. The engine 80 is installed in the vehicle 15 on a mount. Thus, when load acts on the transaxle 110, the load acts on the vehicle 15 toward the laterally right side. This moves the vehicle 15 in the direction of second arrow 310. The vehicle 15 is turned towards the right side as viewed in Fig. 4. The vehicle 15 prevents the deformation of the cabin 200 when a slight overlap frontal collision occurs by consuming load with multiple members and by being turned.

### Obstacles to Lowering the Center of Gravity in the Mechatronic Unit 100

When the center of gravity of the mechatronic unit is high, efforts to lower the center of gravity of the electric vehicle 10 are hindered. To lower the center of gravity of the mechatronic unit 100, the power controller is arranged on the external side surface of the transaxle 110.

As described with reference to Figs. 3 and 4, the direction of the load that acts on the transaxle 110 is controlled by designing the vehicle 15 so that the front side member 40 deforms in the predetermined manner. To control the direction of the load, the predetermined distance DIS is required between the transaxle 110 and the front side member 40.

### Mechatronic Unit 100 of the First Embodiment

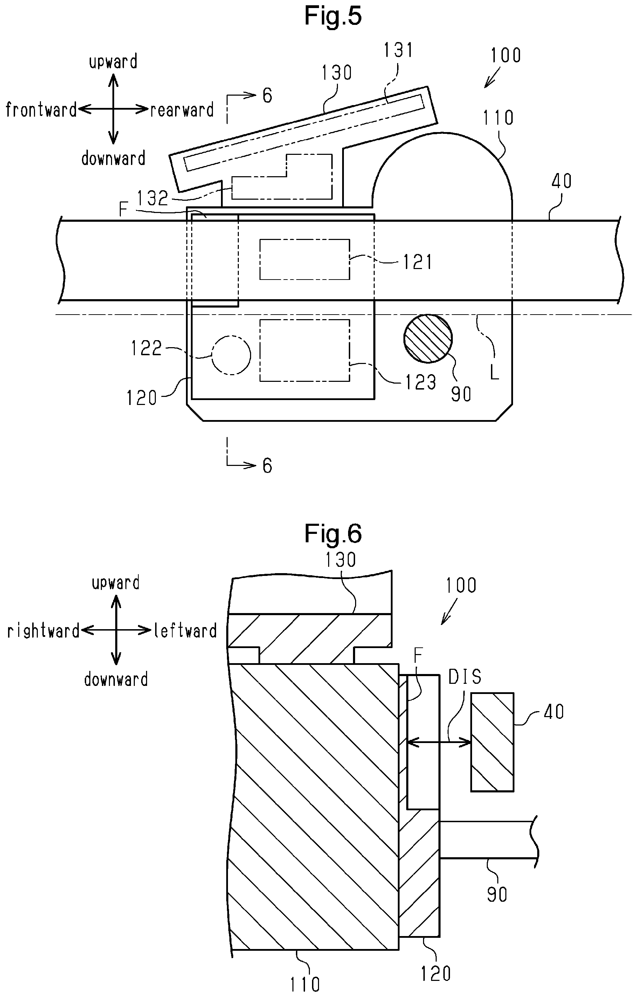

Fig. 5 is a schematic view showing the left side of the mechatronic unit 100 in the electric vehicle 10 of the first embodiment. As shown in Fig. 5, in the mechatronic unit 100 of the first embodiment, the DC-DC converter 120 is arranged at the laterally outer side of the transaxle 110. The DC-DC converter 120 overlaps with the front side member 40 in the side view of the vehicle. The DC-DC converter 120 includes a converter power module 121 that includes switching elements, a reactor 122 that smooths current fluctuations, and a converter smoothing capacitor 123. The reactor 122 is a particularly heavy component among the components of the DC-DC converter 120.

An inverter 130 is arranged on the upper surface of the transaxle 110. The inverter 130 includes an inverter power module 131, which includes switching elements, and an inverter smoothing capacitor 132.

The mechatronic unit 100 includes lateral ends, each defining an external side surface. The external side surface faces the laterally outer side. Further, the external side surface includes an upper and a lower area. When the mechatronic unit 100 is installed in the electric vehicle 10, the upper area is arranged above a horizontal line L, which lies along the uppermost portion of the drive shaft 90 in the vertical direction, and the lower area is arranged below the horizontal line L. The upper area includes a recessed surface F that is located laterally inward from the lower area. The recessed surface F extends to the front end of the external side surface. The recessed surface F overlaps with the front side member 40 in a side view. The external side surface includes an overlapping area that overlaps with the front side member 40, and a non-overlapping area that does not overlap with the front side member 40. The overlapping area includes the recessed surface F. The recessed surface F is located laterally inward from the non-overlapping area.

Fig. 6 is a cross-sectional view of the mechatronic unit 100 of Fig. 5 taken along line 6-6 in Fig. 5. In the mechatronic unit 100, the DC-DC converter 120 is arranged at the left lateral side of the transaxle 110. The inverter 130 is arranged on the upper surface of the transaxle 110. The DC-DC converter 120 includes the external side surface facing the outer lateral side. The external side surface of the DC-DC converter 120 forms at least a part of the external side surface of the mechatronic unit 100. The recessed surface F is a part of the external side surface of the DC-DC converter 120. The recessed surface F and the front side member 40 are separated by a predetermined distance DIS.

### Arrangement of Mechatronic Unit 100 in the First Embodiment

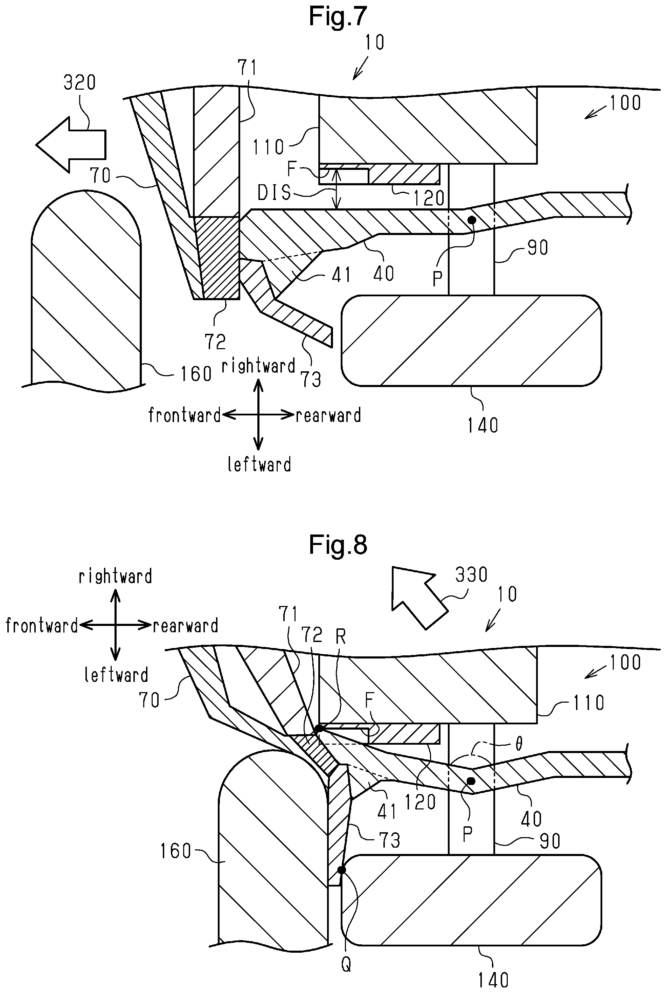

As shown in Fig. 7, the electric vehicle 10 of the first embodiment includes the bumper reinforcement 70, the cross member 71, the first impact absorbing member 72, and the second impact absorbing member 73 in the same manner as the vehicle 15 shown in Fig. 5. The front side member 40 of the electric vehicle 10 is coupled to the bumper reinforcement 70 by the first impact absorbing member 72 in the same manner as the vehicle 15 shown in Fig. 5. The front side member 40 is designed to be bent towards the laterally inner side from the predetermined position P when a frontal collision occurs. For example, the electric vehicle 10 may be a vehicle that includes the mechatronic unit 100 and is of the same model as the vehicle 15 of the comparative example.

In the first embodiment, the DC-DC converter 120, which is a power controller, is arranged at the left lateral side of the transaxle 110, which forms part of the mechatronic unit 100. Thus, the center of gravity of the mechatronic unit 100 is lower than when the power controller is arranged on only the upper surface of the transaxle 110. The transaxle 110 of the electric vehicle 10 is coupled to the front wheels 140 through the drive shaft 90.

The recessed surface F of the mechatronic unit 100 and the front side member 40 are separated by the predetermined distance DIS in plan view. In the same manner as the vehicle 15, in the electric vehicle 10, the predetermined distance DIS is set so that the front side member 40 is bent by the predetermined angle θ at the predetermined position P.

Fig. 7 shows the barrier 160 used for slight overlap frontal collision test. The electric vehicle 10 moves toward the direction of a third arrow 320. The electric vehicle 10 collides with the barrier 160 in a slight overlap frontal collision.

### Slight Overlap Frontal Collision having Mechatronic Unit 100

As shown in Fig. 8, the electric vehicle 10 that collides with the barrier 160 in a slight overlap frontal collision deforms multiple components to absorb the impact in the same manner as the vehicle 15. When the electric vehicle 10 collides with the barrier 160 in the slight overlap frontal collision, the bumper reinforcement 70, the first impact absorbing member 72, the second impact absorbing member 73, and the front wheel 140 consume part of the load.

The load that is not consumed by the bumper reinforcement 70, the first impact absorbing member 72, the second impact absorbing member 73, and the front wheel 140 acts on the front side member 40. As a result, the front side member 40 bends by the predetermined angle θ, at the predetermined first position P in the same manner as the vehicle 15. The bending of the front side member 40 deforms the front side member 40 and consumes part of the load. The bent front side member 40 abuts the recessed surface F at the predetermined third position R.

The recessed surface F of the electric vehicle 10 in the first embodiment is a part of the external side surface of the DC-DC converter 120. The predetermined third position R of the first embodiment is set at the front end portion of the recessed surface F. Thus, load acts on the right lateral side of the DC-DC converter 120. The load acting on the DC-DC converter 120 is transmitted to the transaxle 110 and the engine 80 (not shown). The engine 80 is installed in the electric vehicle 10 on the mount. The load acting on the engine 80 is transmitted to the electric vehicle 10 through the mount. Consequently, when the load acts on the DC-DC converter 120, the load acts on the electric vehicle 10 toward the right lateral side. This moves the electric vehicle 10 in the direction of a fourth arrow 330. The electric vehicle 10 is turned toward the right as viewed in Fig. 8. The electric vehicle 10, in the same manner as the vehicle 15, prevents deformation of the cabin 200 when a slight overlap frontal collision occurs by consuming load with multiple members and by being turned.

### Operation of the First Embodiment

When the electric vehicle 10 encounters a frontal collision, the front side member 40 consumes load as it deforms. Further, the body of the vehicle is designed to deform in a manner protecting the vehicle occupants in the cabin 200.

When mounting the mechatronic unit 100 on the electric vehicle 10, the front side member 40 is arranged at the laterally outer side of the mechatronic unit 100. In the electric vehicle 10 that has the mechatronic unit 100 including the DC-DC converter 120, which is a power controller, arranged on the external side surface of the transaxle 110, the distance is decreased between the mechatronic unit 100 and the front side member 40.

The external side surface of the mechatronic unit 100 includes the recessed surface F that is located in the upper area above the drive shaft 90 in the vertical direction. In the external side surface of the mechatronic unit 100, the recessed surface F is arranged in the area facing the front side member 40, and is recessed laterally inward. The front side member 40 and the recessed surface F, which faces the front side member 40, are separated by the predetermined distance DIS. This provides open space between the mechatronic unit 100 and the front side member 40.

### Advantages of the First Embodiment

(1-1) The mechatronic unit 100 provides open space allowing the front side member 40 to bend even though the DC-DC converter 120, which is the power controller, is arranged on the external side surface to lower the center of gravity.
(1-2) When the front side member 40 is bent due to a frontal collision, the front side member 40 is readily abutted against the mechatronic unit 100 at the predetermined third position R, which is set at the front end of the external side surface of the mechatronic unit 100. The recessed surface F extends to the front end of the external side surface of the mechatronic unit 100. This provides the mechatronic unit 100 with an open space at a location allowing for easy abutment of the front side member 40.
(1-3) The mechatronic unit 100 includes the transaxle 110 arranged at the laterally outer side of the DC-DC converter 120. The DC-DC converter 120 includes the reactor 122, which is a relatively heavy component. The inverter is arranged on the upper surface of the transaxle 110. The DC-DC converter 120, which includes the heavy reactor 122, is arranged at the external side surface of the transaxle 110. This lowers the center of gravity of the mechatronic unit 100.
(1-4) The DC-DC converter 120 is arranged to the external side surface of the transaxle 110 to lower the center of gravity of the mechatronic unit 100. The electric vehicle 10 including the mechatronic unit 100 having a low center of gravity has a higher level of operability than the electric vehicle 10 including the mechatronic unit 100 having a high center of gravity.
(1-5) The electric vehicle 10 includes the front side member 40 that is designed to be bent at the predetermined position P in the laterally inner direction by the predetermined angle θ during a frontal collision. The electric vehicle 10 includes the mechatronic unit 100. The front side member 40 of the electric vehicle 10 is bent at the predetermined position P in the laterally inner direction by the predetermined angle θ during a frontal collision. The external side surface of the mechatronic unit 100 includes the recessed surface F that is located above the drive shaft 90 in the vertical direction. The front side member 40 and the recessed surface F, which faces the front side member 40, is separated by the predetermined distance DIS. The bent front side member 40 abuts the recessed surface F at the third predetermined position R. The electric vehicle 10 allows the front side member 40 and the mechatronic unit 100 to abut each other in the predetermined manner when a frontal collision occurs so that load acts in the predetermined direction. Thus, the electric vehicle 10 provides open space allowing the front side member 40 to be bent by the predetermined angle θ during a slight overlap frontal collision. As a result, the mechatronic unit 100 allows the front side member 40 to abut against the mechatronic unit 100 at the predetermined position when a slight overlap frontal collision occurs so that load acts in the predetermined direction.
(1-6) The electric vehicle 10 includes the front side member 40 that is designed to be bent at the predetermined position P towards the laterally inner direction to the predetermined angle θ during a frontal collision. The electric vehicle 10 includes the mechatronic unit 100. In a side view, the external side surface of the mechatronic unit 100 includes the overlapping area, which is the area that overlaps with the front side member 40. The overlapping area includes the recessed surface F. The recessed surface F is located laterally inward from the non-overlapping area of the external side surface of the mechatronic unit 100. The front side member 40 and the recessed surface F, which faces the front side member 40, are separated by the predetermined distance DIS. The bent front side member 40 abuts the recessed surface F at the third predetermined position R. The electric vehicle 10 allows the front side member 40 and the mechatronic unit 100 to be bent against each other at the predetermined location when a frontal collision occurs, so that load acts in the predetermined direction. Thus, the electric vehicle 10 provides open space allowing the front side member 40 to be bent by the predetermined angle θ during a slight overlap frontal collision. As a result, the mechatronic unit 100 allows the front side member 40 and the mechatronic unit 100 to abut each other at the predetermined location when a slight overlap frontal collision occurs so that load acts in the predetermined direction.
(1-7) The vehicle 15 includes the front side member 40 that is designed to be bent at the predetermined position P in the laterally inner direction by the predetermined angle θ during a frontal collision. In the vehicle 15, the bent front side member 40 abuts the transaxle 110 at a predetermined third position R. The vehicle 15 allows the front side member 40 and the transaxle 110 to abut each other at the predetermined location when a slight overlap frontal collision occurs so that the load acts in the direction designed.

The electric vehicle 10 in the first embodiment provides open space allowing the front side member 40 to be bent by the predetermined angle θ during a slight overlap frontal collision. The electric vehicle 10 and the vehicle 15 have the same front frame structures. Thus, the electric vehicle 10 adapts the design of the vehicle 15 while also protecting the occupants during a slight overlap frontal collision, in the same manner as the vehicle 15.

### Modified Examples of the First Embodiment

The above-described first embodiment may be modified as follows. The above-described first embodiment and the following modified examples can be combined as long as they remain technically consistent with each other.

As long as the open space required for the front side member 40 to bend is provided, the recessed surface F does not need to extend to the front end of the external side surface of the mechatronic unit 100

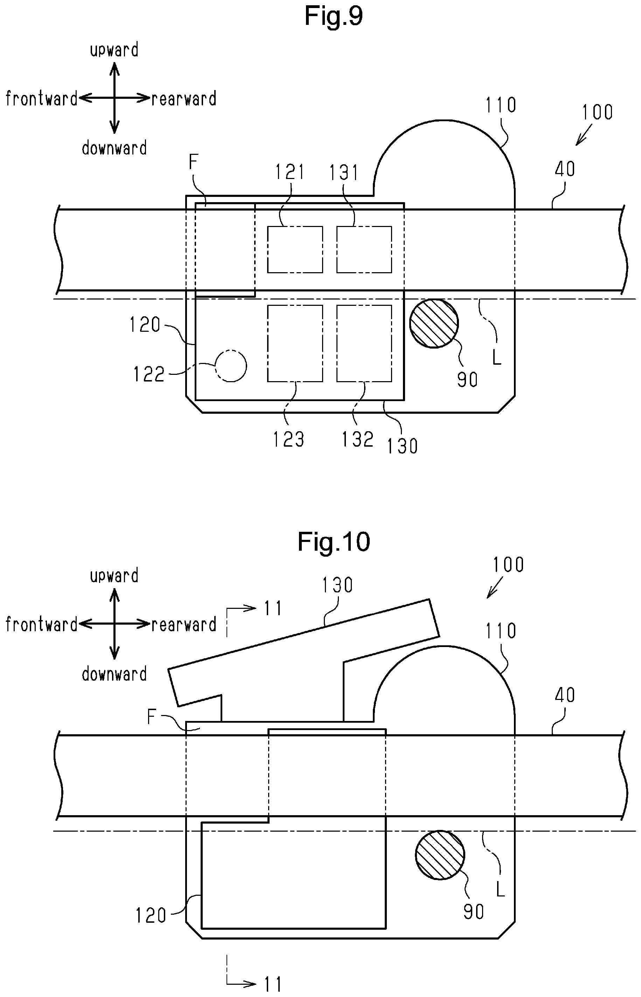

As long as at least one power controller is arranged at the laterally outer side of the transaxle 110, a power controller does not need to be arranged on the upper surface of the transaxle 110. In this case, the recessed surface F results in the same advantages as the mechatronic unit 100 of the first embodiment. For example, the mechatronic unit 100 shown in Fig. 9 includes the DC-DC converter 120 and the inverter 130 that are arranged at the laterally outer side of the transaxle 110. The mechatronic unit 100 shown in Fig. 9 includes the converter power module 121, the reactor 122, the converter smoothing capacitor 123, the inverter power module 131, and the inverter smoothing capacitor 132 that are arranged at the laterally outer side of the transaxle 110. In the mechatronic unit 100 shown in Fig. 9, a power controller is not arranged on the upper surface of the transaxle 110.

### Second Embodiment

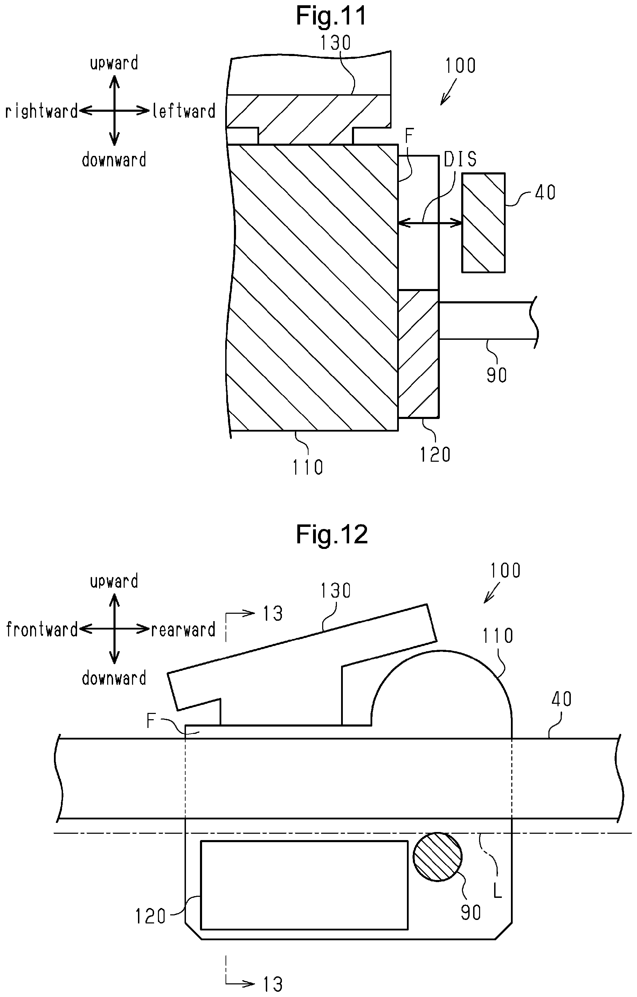

A second embodiment will now be described with reference to Figs 10 and 11. Description of the second embodiment will focus on differences from the first embodiment.

As shown in Fig. 10, the electric vehicle 10 of the second embodiment includes the mechatronic unit 100, the front side member 40, and the DC-DC converter 120 that are overlapped with one other in a side view. The external side surface of the mechatronic unit 100 in the second embodiment includes the recessed surface F that is located above the drive shaft 90 in the vertical direction. In the mechatronic unit 100 of the second embodiment, the DC-DC converter 120 is arranged in an area extending rearward and downward from the recessed surface F. The recessed surface F is a part of the external side surface the transaxle 110. The recessed surface F overlaps with the front side member 40 in side view. The area overlapping with the external side surface of the front side member 40 includes the recessed surface F. The recessed surface F is located laterally inward from the area that is not overlapping with the external side surface of the front side member 40.

Fig. 11 is a cross-sectional view of the mechatronic unit 100 of Fig. 10 taken along line 11-11 in Fig. 10. The DC-DC converter 120 is arranged at the laterally left side of a transaxle 110. The inverter 130 is arranged on the upper surface of the transaxle 110. The recessed surface F, which is a part of the external side surface of the transaxle 110, is separated from the front side member 40 by the predetermined distance DIS.

### Operation of the Second Embodiment

The bent front side member 40 abuts the recessed surface F of the mechatronic unit 100. In the electric vehicle 10 of the second embodiment, the DC-DC converter 120 does not include the recessed surface F that abuts the bent front side member 40.

### Advantages of Second Embodiment

(2-1) The electric vehicle 10 of the second embodiment reduces damage inflicted on the DC-DC converter 120 when the front side member 40 abuts the mechatronic unit 100.

### Third Embodiment

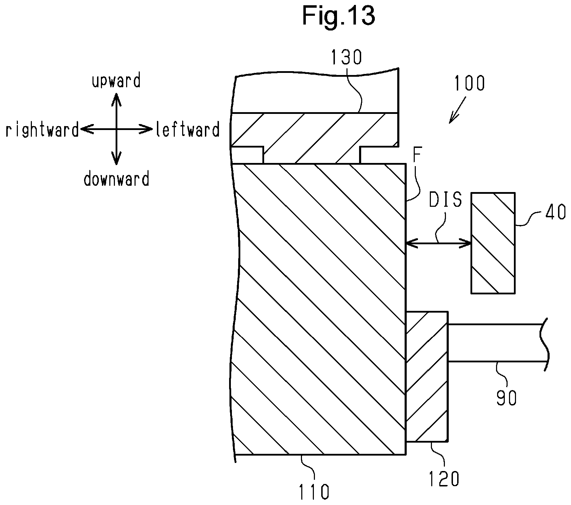

A third embodiment will now be described with reference to Figs 12 and 13. Description of the second embodiment will focus on differences from the first and second embodiment.

As shown in Fig. 12, the electric vehicle 10 of the third embodiment includes the mechatronic unit that has the DC-DC converter 120 arranged downward from the front side member 40 in side view. The external side surface of the mechatronic unit 100 includes the recessed surface F above the drive shaft 90 in the vertical direction.

In the third embodiment, the recessed surface F is a part of the external side surface of the transaxle 110. The recessed surface F overlaps with the front side member 40 in side view. The area of the external side surface overlapping with the front side member 40 includes the recessed surface F. The recessed surface F is located laterally inward from the area of the external side surface that is not overlapping with the front side member 40.

Fig. 13 is a cross-sectional view of the mechatronic unit 100 of Fig. 12 taken along line 13-13 in Fig. 12. The DC-DC converter 120 is arranged at the laterally left side of a transaxle 110. The inverter 130 is arranged on the upper surface of the transaxle 110. The recessed surface F, which is a part of the external side surface of the transaxle 110, is separated from the front side member 40 by the predetermined distance DIS.

### Operation of the Third Embodiment

When the front side member 40 overlaps with the DC-DC converter 120, the front side member 40 that bends toward the laterally inward side may abut the DC-DC converter 120 at a position other than the predetermined third position R in a side view. In this respect, the electric vehicle 10 of the third embodiment includes the DC-DC converter 120 below where the front side member 40 overlaps with the mechatronic unit 100 in side view.

### Advantages of the Third Embodiment

(3-1) In the electric vehicle 10 of the third embodiment, abutment of the front side member 40 bent towards the laterally inward side against the DC-DC converter is avoided at positions other than the predetermined third position R. This reduces damages inflicted on the DC-DC converter 120.

### Other Modified Examples

Elements that can be replaced in each of the above-described embodiments will now be described. The following modified examples can be combined as long as they remain technically consistent with one other.

As long as a power controller is arranged at the laterally outer side of the transaxle 110, the DC-DC converter 120 may be arranged on the upper surface of the transaxle 110. The inverter 130 may be arranged at the laterally outer side of the transaxle 110.

The mechatronic unit 100 may include power controllers other than the DC-DC converter 120 and the inverter 130. For example, the mechatronic unit 100 may include various types of electronic control unit (ECU) as the power controller.

The various types of ECU may be a battery ECU that controls the electric power of the battery 150, a motor ECU that controls the electric power supplied to the first motor-generator MG1 and the second motor-generator MG2, or the like. The motor ECU may control the DC-DC converter 120 and the inverter 130. The mechatronic unit 100 may include a master ECU as the power controller that controls other ECUs through mutual communication. The ECU includes a CPU or a memory that stores controlling programs and/or data. The ECU executes various control-related processing that is executed by the CPU processing the program stored in the memory.

Various changes in form and details may be made to the examples above without departing from the scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A mechatronic unit (100) arranged in front of a cabin of a vehicle (10), the mechatronic unit (100) comprising:
a transaxle (110); and
at least one power controller (120, 130) integrated with the transaxle (110), wherein
the at least one power controller (120, 130) is arranged at an outer side of the transaxle (110) in a lateral direction;
the transaxle (110) includes a motor (MG1, MG2) configured to produce rotational power, a drive shaft (90), and a power transmission mechanism (101, 102) configured to transmit the rotational power of the motor (MG1, MG2) to the drive shaft (90);
the at least one power controller (120, 130) is configured to control electric power supplied to the motor (MG1, MG2);
the mechatronic unit (100) includes an external side surface at an end in the lateral direction;
when the mechatronic unit (100) is mounted on the vehicle (10), the external side surface includes an upper area located above a horizontal line (L) lying along an uppermost portion of the drive shaft (90) in a vertical direction and a lower area located below the horizontal line (L), and
the upper area includes a recessed surface (F) located laterally inward from the lower area.

2. The mechatronic unit (100) according to claim 1, wherein the recessed surface (F) extends to a front end of the external side surface.

3. The mechatronic unit (100) according to claim 1 or 2, wherein
the at least one power controller (120, 130) includes a DC-DC converter (120) and an inverter (130),
the DC-DC converter (120) includes a reactor (122) and is configured to increase voltage of DC power supplied from a battery (150),
the inverter (130) is configured to convert the DC power voltage increased by the DC-DC converter (120) to AC power,
the DC-DC converter (120) is arranged at a laterally outer side of the transaxle (110), and
the inverter (130) is arranged on an upper surface of the transaxle (110).

4. An electric vehicle (10), comprising:
a front side member (40) configured to be bent inward in a lateral direction from a predetermined position (P) when the vehicle (10) encounters a frontal collision; and
the mechatronic unit (100) according to claim 1,
wherein the front side member (40) is configured to abut the recessed surface (F) when the front side member (40) is bent inward in the lateral direction at the predetermined position (P) by a predetermined angle when the vehicle (10) encounters the frontal collision.

5. An electric vehicle (10), comprising:
a front side member (40) configured to be bent inward in a lateral direction at a predetermined position (P) when the vehicle (10) encounters a frontal collision; and
a mechatronic unit (100), wherein
the mechatronic unit (100) includes a transaxle (110) and at least one power controller (120, 130) integrated with the transaxle (110);
the at least one power controller (120, 130) is arranged at an outer side of the transaxle (110) in the lateral direction;
the transaxle (110) includes a motor (MG1, MG2) configured to produce rotational power, a drive shaft (90), and a power transmission mechanism (101, 102) configured to transmit the rotational power of the motor (MG1, MG2) to the drive shaft (90);
the at least one power controller (120, 130) is configured to control electric power supplied to the motor (MG1, MG2);
the mechatronic unit (100) includes an external side surface at an end in the lateral direction;
the external side surface includes an overlapping area that overlaps with the front side member (40) and a non-overlapping area that does not overlap with the front side member (40) in side view;
the overlapping area includes a recessed surface (F) that is located laterally inward from the non-overlapping area, and
the front side member (40) is configured to abut the recessed surface (F) when the front side member (40) is bent inward in the lateral direction at the predetermined position (P) by a predetermined angle when the vehicle (10) encounters the frontal collision.

6. The electric vehicle (10) according to claim 4 or 5, wherein
the at least one power controller (120, 130) includes a DC-DC converter (120),
the DC-DC converter (120) includes a reactor (122) and is configured to increase voltage of DC power supplied from a battery (150),
the DC-DC converter (120) is arranged overlapping the front side member (40) in side view, and
the DC-DC converter (120) is arranged on an area of the external side surface rearward from the recessed surface (F).

7. The electric vehicle (10) according to claim 4 or 5, wherein
the at least one power controller (120, 130) includes a DC-DC converter (120),
the DC-DC converter (120) includes a reactor (122) and is configured to increase voltage of DC power supplied from a battery (150), and
the DC-DC converter (120) is arranged downward from the front side member (40) in side view.
